# FASCICULE DE BREVET EUROPEEN

(11) **EP 0 599 706 B1**
(45) Date de publication et mention de la délivrance du brevet: **02.02.2000**
(21) Numéro de dépôt: 93402810.1
(22) Date de dépôt: 19.11.1993
(51) Int. Cl.: G06F 9/46, H04L 12/24

(54) **Dispositif de traitement de l'information permettant la gestion d'une ressource informatique par un système d'administration**
Informationsbearbeitungseinrichtung, die die Führung von Betriebsmitteln durch ein Verwaltungssystem erlaubt
Information processing apparatus allowing information resource management by a management system

(30) Priorité: 23.11.1992 FR 9214021
(43) Date de publication de la demande: 01.06.1994
(73) Titulaire: BULL S.A., 78434 Louveciennes Cedex (FR)
(72) Inventeur: Remy, Christian, F-78180 Montigny le Bretonneux (FR); Miakinen, Olivier, F-94400 Vitry sur Seine (FR)

(56) Documents cités:
- EP-A- 0 278 316
- EP-A- 0 403 414
- EP-A- 0 463 764
- HEWLETT-PACKARD JOURNAL vol. 41, no. 2, Avril 1990, PALO ALTO US, pages 85 - 91, XP116179 ATUL R. GARG ET AL. 'Developing a Distributed Network Management Application Using HP OpenView Windows'
- INTEGRATED NETWORK MANAGEMENT, II PROC. OF THE IFIP TC6/WG6.6 01 Avril 1991, ELSEVIER, AMSTERDAM, NETHERLANDS, pages 9 - 25 MARSHALL T. ROSE 'Network management is simple: you just need the 'right' framework'
- PROC. OF THE INT. CONF. ON COMMUNICATIONS-ICC 84, vol.3, 14 Mai 1984, NORTH HOLLAND, AMSTERDAM, THE NETHERLANDS pages 1366 - 1370 W. BOGHDADY ET AL. 'A technique for fault-detection and performance measurement in data communications and networks'

## Description

La présente invention concerne un dispositif de traitement de l'information, implanté sur une ressource informatique, pour permettre, par l'intermédiaire d'un protocole administratif standard déterminé et à travers un réseau, le dialogue entre un système d'administration d'objets et ladite ressource informatique.

De manière habituelle, un système d'administration d'objets est chargé d'administrer différentes ressources informatiques telles que, par exemple, un système informatique, un élément de réseau ou tout simplement un logiciel applicatif. Pour cela un dialogue est établi par l'intermédiaire d'un protocole administratif standard déterminé et au travers du réseau, au moyen de requêtes émises par le système d'administration vers les ressources informatiques et de réponses à ces requêtes rendues par les ressources informatiques concernées vers le système d'administration. Pour autoriser ce dialogue, sur chaque ressource informatique est implanté un dispositif de traitement de l'information spécialement prévu pour faciliter l'exécution de cette tâche. Ce dispositif est en fait le correspondant du système d'administration sur l'équipement supportant la ressource informatique à administrer. Ces dispositifs sont de différentes natures, suivant le modèle d'objets administratifs qu'ils supportent et le protocole administratif qu'ils utilisent pour communiquer avec le système d'administration. Un exemple d'un tel dispositif est fourni par l'agent SNMP (Simple Network Management Protocol) qui est décrit dans le document, "Simple Network Management Protocol. Internet Working Group Request for Comments 1157. May 1990", et qui utilise le modèle d'objets et le protocole administratif définis par l'I.E.T.F. (Internet Engineering Task Force).

Les agents SNMP supportent des objets administratifs normalisés par L'I.E.T.F. et/ou des objets dits privés, caractérisés par les fournisseurs des ressources à administrer (constructeurs d'équipement, développeurs de logiciels, etc...). Du fait qu'un même équipement, et particulièrement un système informatique, peut supporter différentes ressources à administrer, il est essentiel d'avoir des agents modulaires, capables de prendre en compte différents ensembles d'objets, appelés bases d'informations d'administration ou MIB (Management Information Base), représentant les différentes ressources à administrer sur l'équipement.

Initialement, les agents étaient entièrement développés en fonction des objets à supporter sur chaque équipement et administrer une nouvelle ressource était une démarche lourde qui imposait d'ajouter une nouvelle MIB et donc exigeait un nouveau développement pour étendre l'agent correspondant.

Dans le dessein de simplifier de telles extensions, plus récemment différents mécanismes ont été définis. Dans une première étape la simplification a consisté en la définition d'interfaces programmatiques dans les agents pour permettre le dialogue entre le noyau (partie commune indépendante des objets, qui prend en charge le dialogue avec le système d'administration, la gestion des erreurs, le formatage des données,...) et diverses MIB du dispositif, ce qui a permis de faciliter le développement de nouveaux objets. Ainsi lorsqu'il est désiré administrer une nouvelle ressource avec un agent donné selon un protocole donné, cette ressource doit être modélisée, ce qui se traduit par un ensemble d'objets ou MIB à caractériser en utilisant les modes de définition préconisés par les standards. Dans cette approche, comme décrit par exemple dans le document "CISCO MIB, CISCO Systems Inc., November 1989", les objets sont définis suivant les méthodes ou le formalisme du standard mais les objets eux-mêmes ne sont pas standards et le résultat est que chaque fabricant développe un ensemble d'objets qui lui est propre. Dans ces conditions, le dialogue entre un système d'administration et une pluralité de ressources de fabricants différents est impossible de manière automatique et requiert l'utilisation d'une pluralité de systèmes d'administration, chacun gérant un ensemble de ressources propres à un fabricant en impliquant le développement, qui peut être long et coûteux, de logiciels supplémentaires permettant de manipuler et de reconfigurer la quasi-totalité d'un dispositif de traitement de l'information mettant en oeuvre les agents.

En outre, les fabricants et les utilisateurs montrent une vive inclination pour le développement d'un nombre de plus en plus important de MIB en même temps que l'intégration de toute MIB existante, ceci complique singulièrement la tâche compte tenu de l'hétérogénéité des différentes ressources.

Dans le but de résoudre au moins partiellement ce problème croissant, dans une seconde étape il a été prévu l'implantation des MIB dans des sous-agents dialoguant selon un protocole défini avec un agent générique. L'implantation de nouveaux objets ne requiert dans ce cas, que le développement d'un sous-agent. Une telle architecture est par exemple utilisée par IBM et décrite dans le document "SNMP MUX Protocol and MIB, Marshall T. Rose, May 1991", il est utilisé un protocole "SMUX" pour dialoguer entre le noyau et les sous-agents du dispositif. Le protocole "SMUX" a été choisi du fait de la simplicité de son élaboration mais présente un grave inconvénient car il ne peut coexister avec d'autres structures d'agents et impose l'utilisation de cette technique et donc le développement d'autres sous-agents (dialoguant selon ledit protocole "SMUX") pour autoriser le traitement d'informations propres à des ressources d'autres fabricants.

Ainsi et jusqu'à présent le problème de la transparence de l'administration de ressources informatiques d'origines différentes reste entier.

La présente invention a pour but de remédier aux inconvénients précités et propose un dispositif de traitement de l'information qui permet au système d'administration d'avoir une vision globale homogène des différentes ressources hétérogènes et d'atteindre ainsi une transparence intégrale quant à l'utilisation desdites ressources hétérogènes dialoguant selon un protocole administratif déterminé.

Pour cela, le dispositif de traitement de l'information mentionné dans le préambule est remarquable en ce qu'il est constitué d'une part de moyens d'aiguillage et de gestion du dialogue comportant, entre autres, un fichier de configuration et d'autre part d'un ensemble d'agents standards spécifiques du protocole administratif déterminé utilisé également dans le présent dispositif, chaque agent supportant un ensemble d'objets, les moyens d'aiguillage et de gestion du dialogue recevant des requêtes en provenance du système d'administration, et après lecture du fichier de configuration les aiguillant en fonction de l'objet sur lequel elles portent vers un ou plusieurs agents appropriés, puis recevant les réponses aux requêtes en provenance du ou des agents appropriés et les transmettant vers le système d'administration.

Ainsi l'idée de l'invention consiste d'une part à utiliser dans le dispositif de traitement de l'information le même protocole administratif que celui utilisé pour le dialogue entre le système administratif et ledit dispositif et d'autre part à prévoir des moyens d'aiguillage et de gestion du dialogue permettant d'orienter sans ambiguïté, grâce à la lecture du fichier de configuration, les requêtes vers les agents concernés, chacun de ces derniers mettant en oeuvre un ensemble d'objets spécifique. De cette manière le système d'administration peut avoir une vision globale homogène de l'ensemble des différentes ressources informatiques. Un utilisateur peut exploiter sans rencontrer de difficultés et de manière automatique un parc de ressources hétérogène car les moyens d'aiguillage et de gestion du dialogue se comportent de manière totalement transparente relativement au système d'administration. Ainsi, dans certaines applications, par exemple, il ne serait pas utile de connaître l'origine des éléments manipulés, ces éléments pouvant concerner différents réseaux tels que : TCP/IP, OSI, DSA...

Il est à noter, en outre, que l'idée d'utiliser dans le dispositif de traitement de l'information le même protocole que le protocole administratif standard qui est par définition complexe va à l'encontre d'un préjugé technique.

C'est ce préjugé qui justifie par exemple, dans l'art antérieur, l'utilisation d'un protocole tel que "SMUX" qui est beaucoup plus simple a priori à mettre en oeuvre mais qui est spécifique d'une structure d'agent et qui de plus est non standard. Divers avantages significatifs non attendus découlent au contraire du fait d'avoir vaincu ce préjugé et conçu le dispositif de traitement de l'information selon l'architecture revendiquée. En effet, une telle architecture permet de prendre en compte sous forme exécutable, par conséquent sous forme binaire, et d'intégrer un agent standard existant sur une ressource sans avoir à modifier en aucune façon le code dudit agent. La seule opération à effectuer consiste à décrire les objets supportés par cet agent dans le fichier de configuration des moyens d'aiguillage et de gestion du dialogue. Lorsque les objets ont une structure arborescente, ce qui est généralement le cas, il suffit alors d'une ligne dans ce fichier pour décrire ces objets. Le dispositif selon l'invention peut ainsi exploiter avantageusement des agents développés par des fabricants de plate-formes ou d'équipements, l'ensemble des agents coexistant sur le même équipement de façon transparente pour le système d'administration. Il est, de plus, possible de développer des ensembles d'objets ou MIB de façon modulaire, dans des agents indépendants. De même, un utilisateur peut rajouter un nouvel ensemble d'objets ou MIB au dispositif de l'invention, en développant lui-même un agent et ceci en utilisant n'importe quelle technologie dès lors que l'agent développé répond aux spécifications du protocole standard utilisé. Les objets concernés peuvent ainsi représenter des applications, par exemple, la messagerie, le transactionnel, les bases de données,... Enfin, le présent dispositif peut avantageusement traiter les requêtes de manière asynchrone, lorsque les moyens d'aiguillage et de gestion du dialogue ont opéré la transmission d'une requête vers un agent, ce dernier la traite pendant que lesdits moyens peuvent acheminer une autre requête vers un autre agent qui effectuera son traitement en parallèle avec le premier. Vu du système d'administration le dispositif selon l'invention traite plusieurs requêtes simultanément. Ce dernier avantage est particulièrement significatif lorsque le traitement des requêtes sur certains objets s'avère long.

La description suivante en regard des dessins annexés, le tout donné à titre d'exemple non limitatif fera bien comprendre comment l'invention peut être réalisée.
La figure 1 représente schématiquement un exemple de réalisation du dispositif de traitement de l'information selon l'invention.
La figure 2 propose un exemple de réseau complexe géré par un seul système d'administration.

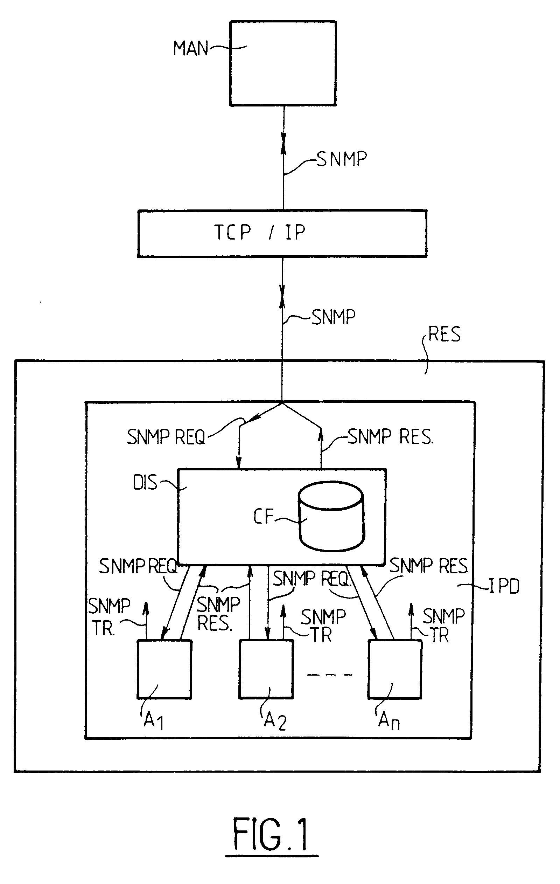

Sur la figure 1 est proposé un exemple d'architecture du dispositif de traitement de l'information IPD conforme à l'invention. D'une manière générale les dispositifs IPD, également appelés par l'homme de l'art agents, de même que les systèmes d'administration sont basés sur un modèle d'objets administratifs qui permet de représenter le monde réel (systèmes, logiciels de communication, etc...) au moyen d'objets abstraits organisés dans une base d'information d'administration appelée couramment MIB. Dans un exemple préféré d'application de la présente invention, le système d'administration est constitué d'un jeu d'applications utilisant les opérations du modèle OSI CMIS (Common Management Information Service) pour manipuler les objets des MIB, supportés par différentes espèces d'agents comme par exemple, les agents DSAC (modèle élaboré conformément à l'architecture distribuée de la société BULL), les agents SNMP et les agents CMIP (Common Management Information Protocol).

Ces différents agents sont conçus sur des modèles d'objets différents et le système d'administration doit par conséquent, au moyen de composants appelés agents intégrateurs, effectuer une conversion entre le modèle d'objets ISO et le modèle d'objets spécifique du réseau concerné.

Comme cela a été exposé précédemment, les agents SNMP utilisent un protocole administratif qui a été défini par l'I.E.T.F. Ce protocole a été conçu pour ne fournir que des moyens de gestion de base reposant d'une part sur un service d'administration limité n'utilisant que quatre fonctions primitives (GET, SET, GET-NEXT, TRAP) et d'autre part sur un modèle d'objet simple.

Une MIB standard a été également définie pour permettre de gérer le protocole TCP/IP, cette dernière peut être cependant étendue de manière expérimentale et/ou de manière privée. La version courante de cette MIB a été baptisée MIB II.

Les mécanismes d'extension utilisés ont pour objet la définition et la mise en oeuvre des différentes MIB privées qui concernent typiquement des équipements de réseaux comme des ponts, des routeurs, des ordinateurs centraux, des concentrateurs, etc...

Actuellement, le nombre de plus en plus important de réalisations de systèmes d'administration et d'agents SNMP incite les utilisateurs de l'administration SNMP à l'extension des domaines plus complexes comme l'administration de systèmes, voire à des applications.

Comme cela a été précédemment mentionné de manière généralisée, dans le présent exemple les agents SNMP communiquent avec le système d'administration par l'intermédiaire de l'agent intégrateur, ici donc du type SNMP, qui convertit l'objet ou les opérations SNMP spécifiques en un modèle d'objet ou des opérations CMIS standards. De cette façon, les opérations CMIS nécessaires à l'exécution de requêtes émises par des applications sont converties en opérations SNMP et transmises vers l'agent concerné. De même, quand une réponse est reçue, elle est également convertie en une réponse à une opération CMIS correspondante et renvoyée vers l'application concernée. De plus, des fonctions du type notification (fonctions TRAP) sont converties en alarmes et transmises vers l'infrastructure de communication.

Des objets SNMP sont représentés dans le système d'administration, par une MIB dans un standard OSI. Le principe connu du "mappage" consiste à définir des classes d'objets administrés pour caractériser des groupes, des tableaux et des entrées de tableaux, les autres objets SNMP étant les attributs de ces classes d'objets administrés.

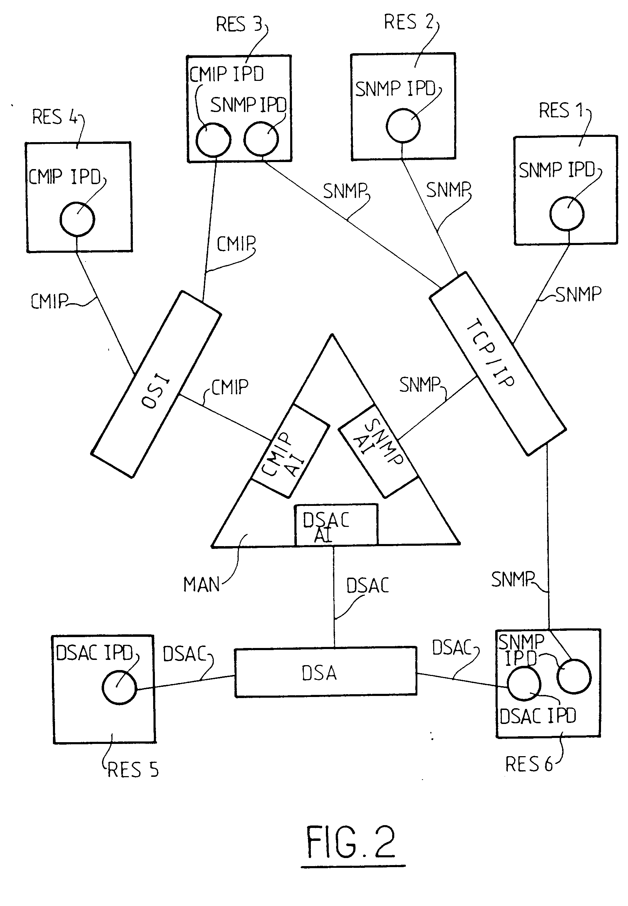

Le dispositif IPD est donc implanté sur une ressource informatique RES pour autoriser, par l'intermédiaire du protocole administratif standard SNMP et à travers le réseau TCP/IP, le dialogue entre le système d'administration d'objets MAN (décrit plus en détail avec la figure 2) et la ressource RES. Conformément à l'idée de l'invention, le dispositif IPD est remarquable en ce qu'il est constitué d'une part de moyens d'aiguillage et de gestion du dialogue DIS comportant, entre autres, un fichier de configuration CF et d'autre part d'un ensemble d'agents standards A1, A2, ..., An spécifiques du protocole administratif SNMP qui est utilisé également dans le dispositif IPD, chaque agent A1, A2,..., An, supportant un ensemble d'objets, les moyens DIS recevant des requêtes SNMP.REQ en provenance du système MAN, et après lecture du fichier de configuration CF, les aiguillant en fonction de l'objet sur lequel elles portent vers un ou plusieurs agents (A1, A2, ..., An) appropriés, puis recevant les réponses SNMP.RES aux requêtes en provenance du ou des agents (A1, A2, ...,An) appropriés et les transmettant vers le système MAN.

Une telle architecture du dispositif IPD entraîne que le système d'administration MAN voit les moyens DIS comme un agent SNMP standard et peut complètement ignorer l'existence des différents agents A1, A2, ...,An. Seuls les moyens DIS connaissent les agents A1, A2,..., An, et leur transmettent sélectivement les requêtes en aiguillant chacune d'entre elles vers celui (ou ceux) concerné. Les moyens DIS utilisent pour cela le fichier de configuration CF qui contient avantageusement un tableau décrivant les différents objets supportés dans les agents avec leurs adresses correspondantes. Ce tableau est construit à la mise en route des moyens DIS. En outre, chaque agent peut transmettre une alarme SNMP.TR en utilisant la fonction TRAP.

De plus, selon une caractéristique de l'invention, le fichier de configuration CF comporte un temporisateur dont la durée est ajustable pour chaque agent et adaptée en fonction des objets sur lesquels portent les requêtes. En effet, lorsque le système MAN envoie une requête à destination d'un agent ou de plusieurs agents déterminés qui supportent l'objet ou les objets concernés, le temps pour obtenir la réponse peut être variable en fonction de l'objet ou des objets sur lesquels portent la requête. Egalement, lorsqu'un agent reçoit une requête, il peut par exemple avoir à s'adresser à d'autres équipements en utilisant un autre protocole et par conséquent demander un accès réseau, le traitement est alors plus compliqué et le temps de réponse à ce type de requête est évidemment bien plus long, c'est pour cela que la temporisation doit être ajustable et qu'elle est définie dans le fichier de configuration pour chaque type d'agent.

Le dispositif selon l'invention permet de résoudre, en outre, différents problèmes spécifiques. Ainsi une requête qui provient du système MAN peut porter, dans le cas simple, sur un objet ou sur plusieurs objets supportés par le même agent, cette requête est alors aiguillée vers l'objet ou les divers objets concernés après lecture du fichier de configuration CF. Cependant la requête du système MAN peut également porter sur plusieurs objets supportés par différents agents, le cas est alors plus complexe à traiter car il faut pouvoir envoyer ladite requête vers les différents agents concernés et récupérer les différentes réponses pour n'en former qu'une afin de la transmettre vers le système MAN. Grâce à la structure du dispositif selon l'invention le problème est avantageusement résolu, ledit dispositif IPD permettant de traiter une requête en provenance du système MAN portant sur une pluralité d'objets supportés par différents agents de la manière suivante. Les moyens DIS orientent alors la requête vers le premier objet concerné dans le premier agent concerné, puis successivement vers les autres objets concernés supportés dans les autres agents concernés, et après avoir reçu les différentes réponses en provenance de la pluralité d'objets supportés par les différents agents, réunissent lesdites réponses en une réponse unique à la requête du système d'administration, réponse unique transmise alors vers le système d'administration MAN.

Un autre problème se pose quand le système MAN émet une requête portant sur la recherche de l'objet suivant, par exemple au moyen de la fonction primitive GET NEXT, et que cet objet suivant est le premier supporté par l'agent suivant, car l'ensemble des objets supportés par l'agent précédant a déjà été parcouru. Dans ce cas particulier, également, la structure remarquable du dispositif IPD permet de résoudre avantageusement ce problème de recherche automatique car la lecture du fichier de configuration CF renseigne immédiatement sur l'orientation à donner à ladite requête et autorise son aiguillage vers l'agent adéquat supportant l'objet concerné.

Le dispositif IPD est donc constitué de deux parties distinctes. La première partie consistant en des moyens DIS complètement indépendants des agents A1, A2,..., An, et dont les principales fonctions sont de prendre en charge le codage et décodage des requêtes selon le protocole SNMP, les opérations d'accès pour la communication des requêtes, et la boucle principale autorisant l'écoute des requêtes. La seconde partie correspond aux différentes MIB supportées par les agents A1, A2,..., An, MIB dont la mise en oeuvre est appelée selon la terminologie méthode d'objets.

Une telle architecture de par sa structure modulaire permet de développer sans difficulté de nouveaux agents et donc de nouvelles MIB ou d'intégrer aisément des MIB déjà existantes quelle que soit la technologie utilisée si l'agent développé ou intégré répond aux spécifications du protocole SNMP.

Pour faciliter le développement et la mise en oeuvre de MIB, pour permettre leur intégration sur une ressource administrée quelconque et en fait pour assurer une interopérabilité avec le système d'administration il est avantageusement utilisé un procédé de mise en oeuvre des agents du dispositif IPD.

Selon ce procédé de mise en oeuvre, dans une première étape est défini l'ensemble d'objets administrés à supporter, dans une seconde étape cet ensemble d'objets est porté sur la ressource informatique concernée, dans une troisième étape l'ensemble d'objets est conçu et mis en oeuvre, dans une quatrième étape l'ensemble d'objets est testé localement, dans une cinquième étape l'ensemble d'objets est pris en charge et donc supporté par le système d'administration, dans une sixième étape l'agent supportant l'ensemble d'objets est intégré à l'ensemble des autres agents du dispositif de traitement de l'information après avoir été décrit dans le fichier de configuration des moyens d'aiguillage et de gestion du dialogue, dans une septième étape est testé l'interopérabilité entre le système d'administration et l'agent ainsi intégré alors que la dernière étape permet de valider cet agent ainsi conçu et testé.

Ainsi la première étape consiste à définir le nouvel agent ou la nouvelle MIB à intégrer à l'ensemble d'agents existant. Dans le standard défini par l'I.E.T.F. une MIB ne couvre que l'administration des couches du protocole TCP/IP et de son environnement proche, aussi il est généralement nécessaire de définir de nouveaux jeux d'objets pour pouvoir prendre en charge l'administration d'autres fonctions qui sont alors considérées soit comme des MIB "privées", soit comme des MIB "expérimentales". Cependant, comme un grand nombre de fabricants de calculateurs et de fournisseurs d'équipements de réseau définissent eux-mêmes de telles MIB afin de permettre l'administration de produits similaires, il est parfois possible de réaliser leur intégration à partir des MIB publiées et dans une phase terminale de les traiter de sorte qu'elles satisfassent totalement aux exigences et donc aux spécifications du protocole utilisé.

En tout état de cause, la ressource à administrer doit être analysée pour déterminer les caractéristiques typiques et pertinentes qui peuvent être modélisées en conformité avec le modèle d'objets élaboré pour le protocole utilisé, de manière à offrir une vue administrative exacte de la fonction.

L'étape de définition de la MIB concernant essentiellement l'analyse fonctionnelle de la ressource à modéliser, l'examen du traitement à effectuer doit être de préférence assuré par l'équipe qui a la charge de l'administration de la ressource, en particulier la description de la MIB dans le format approprié au protocole doit être réalisée pour vérifier la conformité dudit traitement.

La seconde étape de ce procédé est relative au portage donc à l'adaptation de l'agent sur la ressource administrée. La mise en application de la MIB sur la ressource suppose bien entendu l'existence d'un dispositif IPD.

La troisième étape concerne la conception et la mise en oeuvre des méthodes d'objets.

La quatrième étape consiste en un test local de l'agent au moyen de commandes autorisant la transmission de requêtes selon le protocole prévu, ces commandes pouvant être émises soit à partir de la ressource elle-même, soit à partir du système d'administration par l'intermédiaire d'applications génériques une fois que la MIB a été décrite dans le format adéquat (dans ce cas après la cinquième étape).

La cinquième étape concerne la prise en charge de la MIB par le système d'administration, les objets de la MIB devant être décrits dans le format adéquat pour être manipulés par les applications dudit système d'administration. Un des outils de ce dernier permet de convertir la MIB en une MIB correspondante dans le format standard.

Une fois localement testé et validé, l'agent supportant l'ensemble d'objets et donc la MIB est dans une sixième étape intégré aux autres agents du dispositif IPD. Pour réaliser cette intégration l'unique opération requise consiste à décrire la MIB supportée par ledit agent dans le fichier de configuration CF des moyens DIS.

La septième étape permet de tester l'interopérabilité entre le système d'administration et l'agent, des informations étant échangées dans les deux sens afin de réaliser ce test alors qu'à la huitième et dernière étape l'agent ainsi conçu et testé est validé non plus seulement localement mais globalement dans l'environnement comprenant la ressource informatique et le système d'administration.

Un exemple de réseau complexe administré par un unique système d'administration MAN est proposé avec la figure 2.

De préférence le système d'administration MAN est utilisé dans un environnement de gestion distribuée qui intègre l'administration des systèmes, des réseaux et des applications utilisateur. Dans cet exemple le système MAN est une plate-forme ISM (Integrated System Management) qui fournit une vue administrative centralisée de toutes les ressources du réseau et activités ou mouvements dans le réseau, c'est-à-dire d'une part l'infrastructure de réseau en ce qui concerne l'équipement et le logiciel et d'autre part les systèmes informatiques en ce qui concerne le matériel, les systèmes d'exploitations et les applications.

De manière générale, la gestion intégrée des systèmes ISM propose des applications d'administration permettant l'analyse et le contrôle de ces ressources et fonctions requises pour les adapter aux besoins des utilisateurs reposant sur l'information de gestion élaborée et entretenue par des unités de gestion spécifiques des ressources, appelées agents. Les agents communiquent avec la plate-forme ISM et donc le système MAN par l'intermédiaire de protocoles d'administration standards.

Dans l'exemple de la figure 2 les protocoles d'administration supportés par ISM sont le SNMP, le CMIP et le DSAC (pour la compatibilité avec les produits antérieurs et l'architecture distribuée de la société BULL).

Ainsi, de manière générale lorsqu'un composant d'administration est souhaité être utilisé, il est nécessaire de concevoir et de mettre en oeuvre un agent pour supporter les objets administratifs qu'il renferme, cet agent utilisant soit le protocole SNMP, soit le protocole CMIP pour communiquer avec la plate-forme ISM et donc le système d'administration MAN.

Une pluralité de ressources peuvent être administrées par l'intermédiaire du protocole SNMP dans la présente application de gestion intégrée des systèmes ISM, ainsi par exemple, les piles du TCP/IP représentées par l'ensemble des objets référencés MIB II selon le standard défini par l'I.E.T.F., différents systèmes tels que GCOS7 ou GCOS8 ou des systèmes sous UNIX (marque déposée de UNIX System Laboratories Inc.), des serveurs de groupes de travail, des bases de données comme ORACLE (marque de ORACLE Corporation), etc...

Selon la présente invention des ressources étrangères à l'architecture spécifique à la gestion intégrée des systèmes ISM peuvent être également administrées à partir du moment ou elles répondent aux exigences des spécifications du protocole standard utilisé, tel qu'ici SNMP. Ainsi la plate-forme ISM, c'est-à-dire le système MAN, administre toutes ressources administrables conformes au protocole SNMP, calculateurs ou équipements comme les routeurs, les ponts, etc..., utilisant soit des objets standards, soit des objets privés donc des MIB privées. Dans le présent exemple "agents ISM" ou "non ISM" sont donc gérés, coexistent et peuvent être intégrés sur une même ressource lorsqu'ils sont conformes au protocole SNMP. En outre, tout utilisateur doit pouvoir concevoir et mettre en oeuvre des MIB privées pour administrer par exemple ses propres applications, sans pour autant modifier "l'agent ISM", tout au moins en ce qui concerne le code source.

Le procédé de mise en oeuvre d'un agent tient compte des exigences relatives au traitement pour d'une part supporter des développements réalisés de manière autonome mais concernant des MIB qui se correspondent et d'autre part permettre l'intégration des différents agents SNMP résultant de ses développements séparés sur la même ressource.

Le système d'administration MAN, représenté à la figure 2, gère un ensemble de ressources RES1, RES2, ..., RES6 au travers de différents réseaux et selon différents protocoles. Le système MAN a une vision homogène de l'ensemble des ressources et/ou applications du réseau complexe, cependant comme les différents dispositifs IPD et les différents agents sont conçus sur des modèles d'objets différents, le système MAN doit au moyen d'agents intégrateurs effectuer une conversion entre le modèle d'objets ISO et les modèles d'objets spécifiques des réseaux concernés. Ainsi, dans notre exemple, l'agent intégrateur CMIP AI effectue une conversion du modèle d'objets relatifs au protocole CMIP au travers du réseau OSI, l'agent intégrateur SNMP AI permet de convertir le modèle d'objets selon SNMP au travers du réseau TCP/IP et l'agent intégrateur DSAC AI autorise la conversion du modèle d'objets conforme au protocole DSAC au travers du réseau DSA. De cette manière la ressource RES1, par exemple un pont, est administrée au travers du réseau TCP/IP selon le protocole SNMP, le dialogue avec le système MAN étant permis conformément à l'idée de l'invention grâce au dispositif de traitement de l'information SNMP IPD. La ressource RES2, par exemple un système sous UNIX mais n'utilisant pas la gestion intégrée des services ISM, comporte également un dispositif SNMP IPD permettant de dialoguer selon le protocole SNMP avec le système MAN au travers du réseau TCP/IP. La ressource RES3 peut être un système sous UNIX utilisant la gestion intégrée des systèmes ISM qui possède d'une part un dispositif SNMP IPD pour dialoguer selon SNMP avec le système MAN au travers du réseau TCP ITP et d'autre part un dispositif CMIP IPD pour dialoguer selon le protocole CMIP avec le système MAN mais au travers du réseau OSI. La ressource RES4 est par exemple un système informatique quelconque utilisant les services CMIS et possède un dispositif CMIP IPD pour dialoguer selon CMIP avec le système MAN au travers du réseau OSI. La ressource RES5 peut correspondre à un noeud DSA comme DATANET, elle possède un dispositif DSAC IPD pour dialoguer avec le système MAN au travers du réseau DSA selon le protocole DSAC. Enfin, sur la figure 2, la ressource RES6 peut être un système hôte, par exemple un DPS7, qui utilise d'une part un dispositif DSAC IPD pour dialoguer avec le système MAN au travers du réseau DSA selon le protocole DSAC et d'autre part un dispositif SNMP IPD pour dialoguer avec le système MAN au travers du réseau TCP/IP selon le protocole SNMP.

Pour conclure, le dispositif de traitement de l'information IPD ainsi que le procédé de mise en oeuvre d'agents pour l'intégration dans ledit dispositif sont, tels que décrits et revendiqués, directement et avantageusement exploitables.

L'implantation du dispositif selon l'invention sur chacune des ressources à administrer permet à un utilisateur du système d'administration d'avoir une représentation homogène du monde complexe à administrer. Ainsi, par exemple, cet utilisateur qui travaillerait devant un écran pourrait manipuler différents éléments sans même savoir si ces derniers concernent un réseau TCP/IP, un réseau OSI ou un réseau DSA. Un unique système d'administration est par conséquent nécessaire et l'uniformisation du réseau peut se faire en développant et en intégrant aisément des agents selon le présent procédé de mise en oeuvre dans le dispositif selon l'invention sans être prisonnier d'une technologie.

## Revendications

1. Dispositif de traitement de l'information, implanté sur une ressource informatique, pour permettre, par l'intermédiaire d'un protocole administratif standard déterminé et à travers un réseau, le dialogue entre un système d'administration d'objets et ladite ressource informatique, caractérisé en ce qu'il est constitué d'une part de moyens (DIS) d'aiguillage et de gestion du dialogue comportant, entre autres, un fichier de configuration (CF) et d'autre part d'un ensemble d'agents standards (A1 ... An) spécifiques du protocole administratif déterminé utilisé également dans le présent dispositif (IPD), chaque agent supportant un ensemble d'objets, les moyens d'aiguillage et de gestion du dialogue recevant des requêtes (SNMP.REQ) en provenance du système d'administration (MAN), et après lecture du fichier de configuration, les aiguillant en fonction de l'objet sur lequel elles portent vers un ou plusieurs agents appropriés, puis recevant les réponses (SNMP.RES) aux requêtes en provenance du ou des agents appropriés et les transmettant vers le système d'administration.

2. Dispositif de traitement de l'information selon la revendication 1, caractérisé en ce qu'il autorise un traitement asynchrone des requêtes, les moyens d'aiguillage et de gestion du dialogue opérant la transmission d'une requête vers un agent, ce dernier la traitant pendant que lesdits moyens d'aiguillage et de gestion du dialogue acheminent une autre requête vers un autre agent effectuant alors son traitement en parallèle avec le premier agent.

3. Dispositif de traitement de l'information selon la revendication 1 ou 2, caractérisé en ce que le fichier de configuration des moyens d'aiguillage et de gestion du dialogue contient un tableau décrivant les différents objets supportés dans les agents avec leurs adresses correspondantes, ce tableau étant construit lors de la mise en route des moyens d'aiguillage et de gestion du dialogue.

4. Dispositif de traitement de l'information selon la revendication 3, caractérisé en ce que le fichier de configuration comporte en outre un temporisateur dont la durée est ajustable pour chaque agent et adaptée en fonction des objets sur lesquels portent les requêtes.

5. Dispositif de traitement de l'information selon la revendication 4, caractérisé en ce qu'il permet de traiter une requête en provenance du système d'administration portant sur une pluralité d'objets supportés par différents agents, les moyens d'aiguillage et de dialogue orientant alors la requête vers le premier objet concerné dans le premier agent concerné, puis successivement vers les autres objets concernés supportés dans les autres agents concernés, et après avoir reçu les différentes réponses en provenance de la pluralité d'objets supportés par les différents agents, réunissant lesdites réponses en une réponse unique à la requête du système d'administration, réponse unique transmise alors vers le système d'administration.

6. Dispositif de traitement de l'information selon la revendication 5, caractérisé en ce qu'il permet, lorsqu'une requête porte sur la recherche de l'objet suivant et que ce dernier est le premier objet supporté par l'agent suivant, d'aller lire automatiquement ledit objet suivant après lecture du fichier de configuration, ladite requête étant alors autorisée et aiguillée vers l'agent adéquat supportant l'objet concerné.

7. Procédé de mise en oeuvre d'un agent du dispositif de traitement de l'information selon l'une des revendications précédentes, caractérisé en ce que dans une première étape est défini l'ensemble d'objets administrés à supporter, dans une seconde étape cet ensemble d'objets est porté sur la ressource informatique concernée, dans une troisième étape l'ensemble d'objets est conçu et mis en oeuvre, dans une quatrième étape l'ensemble d'objets est testé localement, dans une cinquième étape l'ensemble d'objets est pris en charge et donc supporté par le système d'administration, dans une sixième étape l'agent supportant l'ensemble d'objets est intégré à l'ensemble des autres agents du dispositif de traitement de l'information après avoir été décrit dans le fichier de configuration des moyens d'aiguillage et de gestion du dialogue, dans une septième étape est testé l'interopérabilité entre le système d'administration et l'agent ainsi intégré alors que la dernière étape permet de valider cet agent ainsi conçu et testé.

## Claims

1. Information-processing device, installed on an information-technology resource, to permit dialogue between an object administration system and said information-technology resource, via a given standard administrative protocol and through a network, characterised in that it is constituted on the one hand by dialogue management and routing means (DIS) comprising, *inter alia*, a configuration file (CF) and on the other hand a set of specific standard agents (A1 ... An) of the given administrative protocol also used in the present device (IPD), each agent supporting a set of objects, the dialogue management and routing means receiving requests (SNMP.REQ) from the administration system (MAN), and after reading the configuration file, routing them as a function of the object to which they relate to one or more appropriate agents, then receiving the responses (SNMP.RES) to the requests from the appropriate agent(s) and transmitting them to the administration system.

2. Information-processing device according to Claim 1, characterised in that it authorises asynchronous processing of the requests, the dialogue management and routing means performing the transmission of a request to an agent, the latter processing it while said dialogue management and routing means convey another request to another agent, which then processes it in parallel with the first agent.

3. Information-processing device according to Claim 1 or 2, characterised in that the configuration file of the dialogue management and routing means contains a table describing the different objects supported in the agents with their corresponding addresses, this table being constructed during the start-up of the dialogue management and routing means.

4. Information-processing device according to Claim 3, characterised in that the configuration file also comprises a time-delay device, the period of which is adjustable for each agent and adapted as a function of the objects to which the requests relate.

5. Information-processing device according to Claim 4, characterised in that it makes it possible to process a request from the administration system relating to a plurality of objects supported by different agents, the dialogue and routing means then directing the request to the first object concerned within the first agent concerned, then in succession to the other objects concerned supported within the other agents concerned, and after having received the different responses from the plurality of objects supported by the different agents, combining said responses into a single response to the request from the administration system, which single response is then transmitted to the administration system.

6. Information-processing device according to Claim 5, characterised in that when a request is related to searching for the following object and when the latter is the first object supported by the following agent, it makes it possible to automatically go and read said following object after reading the configuration file, said request then being authorised and routed to the suitable agent supporting the object concerned.

7. Method for implementing an agent of the information-processing device according to one of the preceding claims, characterised in that, in a first step, the set of administered objects to be supported is defined, in a second step this set of objects is taken to the information-technology resource concerned, in a third step the set of objects is designed and implemented, in a fourth step the set of objects is tested locally, in a fifth step the set of objects is dealt with and therefore supported by the administration system, in a sixth step the agent supporting the set of objects is incorporated with all the other agents of the information-processing device after dialogue management and routing means have been described in the configuration file, in a seventh step the interoperability is tested between the administration system and the agent thus incorporated while the last step makes it possible to validate this agent thus designed and tested.

## Patentansprüche

1. Datenverarbeitungsvorrichtung, die in einem Datenverarbeitungs-Betriebsmittel implantiert ist, um über ein bestimmtes Standard-Managementprotokoll und über ein Netz den Dialog zwischen einem System für das Management von Objekten und dem Datenverarbeitungs-Betriebsmittel zu ermöglichen, dadurch gekennzeichnet, daß sie einerseits aus Mitteln (DIS) zur Lenkung und Steuerung des Dialogs, die unter anderem eine Konfigurationsdatei (CF) enthalten, und andererseits aus einer Gesamtheit von Standard-Agenten (A1, ..., An) gebildet ist, die für das bestimmte Management-Protokoll spezifisch sind, das auch in der vorliegenden Vorrichtung (IPD) verwendet wird, wobei jeder Agent eine Gesamtheit von Objekten unterstützt, wobei die Mittel zur Lenkung und Steuerung des Dialogs Anforderungen (SNMP.REQ) vom Management-System (MAN) empfangen und sie nach dem Lesen der Konfigurationsdatei in Abhängigkeit vom Objekt, auf das sie sich beziehen, an einen oder mehrere geeignete Agenten lenken und dann die Antworten (SNMP.RES) auf die Anforderungen von dem oder den geeigneten Agenten empfangen und sie an das Management-System übertragen.

2. Datenverarbeitungsvorrichtung nach Anspruch 1, dadurch gekennzeichnet, daß sie eine asynchrone Verarbeitung der Anforderungen zuläßt, wobei die Mittel zur Lenkung und Steuerung des Dialogs die Übertragung einer Anforderung an einen Agenten ausführen, wobei sie dieser letztere verarbeitet, während die Mittel zur Lenkung und Steuerung des Dialogs eine weitere Anforderung an einen weiteren Agenten leiten, der dann seine Verarbeitung parallel zum ersten Agenten ausführt.

3. Datenverarbeitungsvorrichtung nach Anspruch 1 oder 2, dadurch gekennzeichnet, daß die Konfigurationsdatei der Mittel zur Lenkung und Steuerung des Dialogs eine Tabelle enthält, die die verschiedenen Objekte beschreibt, die in den Agenten zusammen mit ihren entsprechenden Adressen unterstützt werden, wobei diese Tabelle beim Hochfahren der Mittel zur Lenkung und Steuerung des Dialogs aufgebaut wird.

4. Datenverarbeitungsvorrichtung nach Anspruch 3, dadurch gekennzeichnet, daß die Konfigurationsdatei außerdem einen Zeitgeber enthält, dessen Dauer für jeden Agenten einstellbar und an die Objekte angepaßt ist, auf die sich die Anforderungen beziehen.

5. Datenverarbeitungsvorrichtung nach Anspruch 4, dadurch gekennzeichnet, daß sie die Verarbeitung einer Anforderung ermöglicht, die vom Management-System stammt und sich auf mehrere Objekte bezieht, die von verschiedenen Agenten unterstützt werden, wobei die Mittel zur Lenkung und Steuerung des Dialogs die Anforderung dann an das erste betreffende Objekt im ersten betreffenden Agenten richten und dann nacheinander an die anderen betreffenden Objekte, die von den anderen betreffenden Agenten unterstützt werden, wobei sie, nachdem sie die verschiedenen Antworten von den mehreren Objekten, die von den verschiedenen Agenten unterstützt werden, empfangen hat, diese Antworten zu einer einzigen Antwort auf die Anforderung des Management-Systems vereinigt, wobei die einzige Antwort dann an das Management-System übertragen wird.

6. Datenverarbeitungsvorrichtung nach Anspruch 5, dadurch gekennzeichnet, daß sie dann, wenn sich eine Anforderung auf die Suche des folgenden Objekts bezieht und dieses letztere das erste Objekt ist, das vom folgenden Agenten gehalten wird, nach dem Lesen der Konfigurationsdatei automatisch das folgende Objekt liest, wobei die Anforderung dann zugelassen und an den geeigneten Agenten, der das betreffende Objekt unterstützt, gelenkt wird.

7. Verfahren zum Betreiben eines Agenten der Datenverarbeitungsvorrichtung nach einem der vorangehenden Ansprüche, dadurch gekennzeichnet, daß in einem ersten Schritt die Gesamtheit von zu unterstützenden gemanagten Objekten definiert wird, in einem zweiten Schritt diese Gesamtheit von Objekten auf ein betreffendes Datenverarbeitungs-Betriebsmittel bezogen wird, in einem dritten Schritt die Gesamtheit von Objekten entworfen und gestartet wird, in einem vierten Schritt die Gesamtheit von Objekten lokal getestet wird, in einem fünften Schritt die Gesamtheit von Objekten in Dienst genommen und daher vom Management-System unterstützt wird, in einem sechsten Schritt der die Gesamtheit von Objekten haltende Agent in die Gesamtheit der anderen Agenten der Datenverarbeitungsvorrichtung integriert wird, nachdem in der Konfigurationsdatei Mittel zur Lenkung und Steuerung des Dialogs beschrieben worden sind, in einem siebten Schritt die Fähigkeit zur Zusammenarbeit zwischen dem Management-System und dem in dieser Weise integrierten Agenten getestet wird, während der letzte Schritt die Validierung dieses so entworfenen und getesteten Agenten ermöglicht.
